# EUROPÄISCHE PATENTSCHRIFT

(11) **EP 1 925 508 B1**
(45) Veröffentlichungstag und Bekanntmachung des Hinweises auf die Patenterteilung: **25.11.2009**
(21) Anmeldenummer: 07020889.7
(22) Anmeldetag: 25.10.2007
(51) Int. Cl.: B60R 21/20, B60R 21/205

(54) **Airbagmodulanordnung**
Airbag module assembly
Ensemble de module airbag

(30) Priorität: 27.11.2006 DE 102006055909
(43) Veröffentlichungstag der Anmeldung: 28.05.2008
(73) Patentinhaber: GM Global Technology Operations, Inc., Detroit, MI 48265-3000 (US)
(72) Erfinder: Rick, Ullrich, 55595 Roxheim (DE); Wagner, Udo, 65428 Rüsselsheim (DE)
(74) Vertreter: Daniel, Ulrich W.P.

(56) Entgegenhaltungen:
- DE-A1- 10 203 286
- DE-A1- 10 346 012
- US-A- 5 527 064
- US-A1- 2001 040 365
- US-A1- 2004 041 379
- US-A1- 2004 046 371

## Beschreibung

Die vorliegende Erfindung betrifft eine Airbagmodulanordnung nach dem Oberbegriff des Anspruchs 1.

Ein Airbagmodul enthält einen Airbag, der sich durch das von einem Gasgenerator erzeugte, sich rasch ausdehnende Gas entfalten und so Fahrzeuginsassen bei einem Unfall schützen kann. Neben Fahrerairbags, die im Lenkrad aufgenommen sind, können Airbagmodule auch hinter einem Fahrzeuginnenverkleidungsteil angeordnet werden, beispielsweise einer Armaturentafel (Beifahrerairbag), einem Teil des Dachhimmels (Dachairbag) oder der Innenverkleidung einer A-, B- oder C-Säule (Seitenairbag).

Um dabei die bei der Entfaltung des Airbags auftretenden Kräfte aufnehmen zu können, ist es aus der DE 103 12 948 A1, der DE 103 12 947 A1 und der DE 103 25 435 A1 bekannt, das Airbagmodul an einem Querträger der Fahrzeugkarosserie unterhalb einer Armaturentafel durch Steck-, Schraub- bzw. Klipsverbindungen zu befestigen.

Die Befestigung an einem Träger der Fahrzeugkarosserie kann jedoch aufwändig sein, wenn dieser nicht gut zugänglich ist. Zudem erfordert die Anbindung zwischen dem Fahrzeuginnenverkleidungsteil und dem Träger der Fahrzeugkarosserie einen entsprechenden Bauraum zur Aufnahme des Airbagmoduls, der insbesondere bei Dach- und Seitenairbags nicht immer zur Verfügung gestellt werden kann. Auch andere Positionen eines Beifahrerairbags innerhalb einer Armaturentafel sowie ein beifahrerseitiger Handschuhkasten können den zur Verfügung stehenden Bauraum für das Airbagmodul limitieren und eine Anbindung an einen Träger der Fahrzeugkarosserie erschweren.

Diese aus dem Stand der Technik bekannte Befestigung an einen Querträger der Fahrzeugkarosserie erfordert zudem ein zusätzliches Halteteil, welches an dem Querträger beispielsweise durch Schweissen befestigt werden muss, bevor das Airbagmodul hieran festgelegt werden kann. Dieses zusätzliche Halteteil erhöht die Produktionskosten, das Gesamtgewicht sowie die herzustellende, zu bevorratende und zu montierende Teilezahl.

Aus der US 2001/0040365 A1 und der DE 102 03 286 A1 sind Airbagmodulanordnungen nach dem Oberbegriff des Anspruchs 1 und 4 bekannt, bei denen ein Airbagmodul mittels einer Steck- und einer Schraubverbindung an einer Armaturentafel befestigt ist.

Aus der DE 103 46 012 A1 ist die Befestigung eines Airbagmoduls an einer Armaturentafel mittels Steckverbindungen bekannt.

In der US 2004/0041379 A1, die die US 2001/0040365 A1 weiterbildet, ist eine Steckverbindung mittels einer Schraubverbindung gesichert.

Aufgabe der vorliegenden Erfindung ist es, eine verbesserte Airbagmodulanordnung zur Verfügung zu stellen.

Diese Aufgabe wird durch die Merkmale des Patentanspruchs 1 bzw. 4 gelöst. Vorteilhafte Ausführungsformen der Erfindung sind Gegenstand der Unteransprüche.

Erfindungsgemäss wird eine Airbagmodulanordnung für ein Kraftfahrzeug vorgeschlagen, die ein Airbagmodul und ein Fahrzeuginnenverkleidungsteil umfasst. Bei dem Fahrzeuginnenverkleidungsteil kann es sich insbesondere um eine Armaturentafel, eine Innenverkleidung einer A-, B- oder C-Säule des Kraftfahrzeugs oder einen Dachhimmel handeln.

Das Airbagmodul ist mittels einer ersten Steckverbindung und einer zweiten Verbindung mit dem Fahrzeuginnenverkleidungsteil selber, bevorzugt lösbar, verbunden. Hierzu weist es ein erstes Verbindungselement der ersten Steckverbindung und ein drittes Verbindungselement der zweiten Verbindung auf, während das Fahrzeuginnenverkleidungsteil ein zweites Verbindungselement und ein viertes Verbindungselement aufweist.

Das erste und zweite Verbindungselement bilden zusammen die erste Steckverbindung, während die zweite Verbindung von dem dritten und vierten Verbindungselement des Airbagmoduls gebildet wird.

Somit wird das Airbagmodul erfindungsgemäß direkt an dem Fahrzeuginnenverkleidungsteil befestigt und muss nicht mehr an einem Querträger der Fahrzeugkarosserie festgelegt werden. Hierdurch wird die Montage des Airbagmoduls vereinfacht, welches nun nicht mehr an einem unter Umständen schwer zugänglichen Querträger der Fahrzeugkarosserie befestigt werden muss.

Darüber hinaus muss kein separates Halteteil an einem Querträger angebracht werden, was die Anzahl der benötigten Teile sowie der notwendigen Montageschritte verringern kann.

Weiterhin kann das Airbagmodul aufgrund der direkten Befestigung an dem Fahrzeuginnenverkleidungsteil auch in begrenzten Bauräumen aufgenommen werden, die insbesondere keinen Raum für einen Querträger oder dergleichen bieten. Zudem muss der Verlauf eines Querträgers keine Anbindungsmöglichkeit für das Airbagmodul mehr vorsehen und kann daher unter Festigkeits-, Montage- oder ähnlichen Gesichtspunkten optimiert werden.

Die Befestigung mittels einer ersten Steckverbindung ist besonders montagefreundlich, da zum Schließen dieser Verbindung lediglich das erste und zweite Verbindungselement in formschlüssigen Eingriff miteinander gebracht werden müssen, wobei vorteilhafterweise das zweite Verbindungselement an dem Fahrzeuginnenverkleidungsteil leicht zugänglich angeordnet werden kann.

In einer ersten Ausführung der vorliegenden Erfindung ist die zweite Verbindung als Schraubverbindung ausgebildet. Dies ermöglicht eine sichere und präzise Festlegung des Airbagmoduls an dem Fahrzeuginnenverkleidungsteil. Hierzu kann das dritte und vierte Befestigungselement jeweils als Flansch ausgestaltet sein, in dem eine entsprechende Sack- oder Durchgangsbohrung vorgesehen ist. Eine oder mehrere Schrauben werden durch die entsprechenden Bohrungen in den Flanschen geführt und mit einem der Flansche oder einer Mutter verschraubt.

Bevorzugt ist dabei die Schraubverbindung im Wesentlichen senkrecht zu einer Einschubrichtung der ersten Steckverbindung ausgerichtet. Die erste Steckverbindung legt das Airbagmodul in einer oder zwei zur Einschubrichtung senkrechten Ebenen formschlüssig fest. Durch das Verschrauben in einer dieser Ebenen wird auch eine Bewegung des Airbagmoduls in der Einschubrichtung verhindert, so dass dieses anschließend in allen drei Raumrichtungen fixiert ist. Auf das Airbagmodul einwirkende Lasten können auf diese Weise je nach Wirkrichtung hauptsächlich von der ersten oder zweiten Verbindung aufgenommen werden, wobei für jede Kraftkomponente eine geeignete Anbindung vorhanden ist.

Zudem kann diese Ausrichtung die Montage erleichtern, da zunächst die erste Steckverbindung formschlüssig in Eingriff kommt und das Airbagmodul in dieser solange verschoben werden kann, bis die Bohrungen der zweiten Schraubverbindung miteinander fluchten.

Um Fertigungstoleranzen noch weiter auszugleichen, kann eine Bohrung in dem dritten und/oder vierten Verbindungselement als Langloch in einer zu der Einschubrichtung im Wesentlichen senkrechten Richtung ausgebildet sein. Dann kann das Airbagmodul in seiner ersten Steckverbindung solange verschoben werden, bis diese Bohrungen in dieser Richtung miteinander fluchten. Lageabweichungen in der hierzu senkrechten Richtung können dann aufgrund der als Langloch bzw. Langlöcher ausgeführten Bohrungen ausgeglichen werden.

Vorteilhafterweise ist die Schraubverbindung im Wesentlichen parallel zu einer Schussrichtung des Airbagmoduls ausgerichtet. Hierdurch wird die beim Entfalten des Airbags wirkende Kraft einerseits von der formschlüssigen ersten Steckverbindung und andererseits von der zweiten Schraubverbindung aufgenommen, wobei beide Verbindungen jeweils in derjenigen Richtung beaufschlagt werden, in der sie die höchsten Lasten ertragen. Eine solche Verschraubung kann zudem montagetechnisch vorteilhaft, insbesondere leichter zugänglich sein.

In einer zweiten Ausführung der vorliegenden Erfindung ist auch die zweite Verbindung als Steckverbindung ausgebildet. Dies ermöglicht eine raschere Montage und erfordert insbesondere nicht die Verwendung von Schrauben, was gleichermaßen das Gewicht, die Teilezahl, die Montageschritte und damit die Montagedauer und die Produktionskosten reduzieren kann.

Bevorzugt ist dabei eine zweite Einschubrichtung der zweiten Steckverbindung im Wesentlichen parallel zu einer ersten Einschubrichtung der ersten Steckverbindung ausgerichtet. Dies ermöglicht eine sehr einfache Montage und zugleich eine sichere Festlegung des Airbagmoduls: zunächst wird die erste Steckverbindung in formschlüssigen Eingriff gebracht und das Airbagmodul in der ersten Einschubrichtung solange verschoben, bis das dritte und vierte Verbindungselement miteinander fluchten. Anschließend wird das Airbagmodul in der hierzu im Wesentlichen parallelen zweiten Einschubrichtung soweit zurückgeschoben, dass auch die zweite Steckverbindung in formschlüssigen Eingriff gelangt.

Zu diesem Zweck gestattet die erste Steckverbindung neben einer Verschiebung des Airbagsmoduls in der ersten Einschubrichtung vorteilhafterweise auch ein Schwenken des Airbagmoduls um eine zu dieser Einschubrichtung im Wesentlichen senkrechte Drehachse. Dies kann beispielsweise dadurch realisiert sein, dass diese Steckverbindung mit etwas Spiel ausgebildet ist.

Zusätzlich oder alternativ kann die erste und/oder zweite Steckverbindung eine gewisse Elastizität aufweisen, die es gestattet, zunächst die erste und anschließende die zweite Steckverbindungen miteinander in Eingriff zu bringen.

Sind die erste und zweite Einschubrichtung im Wesentlichen parallel zueinander, so muss das Airbagmodul nur wenig verschwenkt werden, um die zweite Steckverbindung in Flucht zu bringen. Dies reduziert vorteilhaft das hierzu notwendige Spiel bzw. die hierzu notwendige elastische Deformation in der ersten Steckverbindung.

Bei der vorstehend beschriebenen Befestigungsweise ist die zweite Steckverbindung im montierten Zustand in der zweiten Einschubrichtung noch nicht festgelegt, da die Einschubbewegungen reversibel sind. Daher umfasst in einer bevorzugten Ausführung die erste und/oder zweite Steckverbindung ein elastisches Element, welches das Airbagmodul in der Einschubrichtung der zweiten Steckverbindung vorspannt. Hierdurch kann das Airbagmodul auch in der zweiten Einschubrichtung kraftschlüssig festgelegt werden.

Wird beispielsweise zunächst die erste Steckverbindung spielbehaftet in der ersten Einschubrichtung in Eingriff mit dem Fahrzeuginnenverkleidungsteil gebracht, anschließend das Airbagmodul um eine hierzu im Wesentlichen senkrechte Drehachse gekippt und anschließend in die zweite Einschubrichtung verschoben, so kann ein elastisches Element, beispielsweise eine Feder oder ein Elastomer, das Airbagmodul in die zweite Einschubrichtung vorspannen und so einem Zurückgleiten in dieser Richtung und damit einem Lösen der Verbindung entgegenwirken.

Gleichermaßen kann beispielsweise die erste Steckverbindung unter elastischer Deformation des ersten Verbindungselementes in der ersten Einschubrichtung verschoben werden, wobei das solcherart deformierte Verbindungselement sich bei der anschließenden Verschiebung in die zweite Einschubrichtung teilweise entspannt und so die zweite Steckverbindung ebenfalls in die zweite Einschubrichtung vorspannt.

Zusätzlich oder alternativ kann die erste und/oder zweite Steckverbindung ein Verriegelungselement umfassen, welches in einer Verriegelungsstellung das Airbagmodul in einer gegenüber einer maximalen Einschubposition versetzten Endposition gegen eine Bewegung entgegen der zweiten Einschubrichtung hin zu der maximalen Einschubposition festlegt.

Zur Montage des Airbagmoduls wird zunächst die erste Steckverbindung in eine maximale Einschubposition gebracht und anschließend das Airbagmodul in der zweiten Einschubrichtung in eine gegenüber dieser maximalen Einschubposition versetzte Endposition verschoben. Um ein Zurückgleiten entgegen der zweiten Einschubrichtung zu verhindern, wird die erste und/oder zweite Steckverbindung anschließend mittels des Verriegelungselements formschlüssig in dieser Richtung festgelegt.

Das vorstehend erläuterte elastische Element, welches das Airbagmodul in die zweite Einschubrichtung vorspannt, kann dabei das Verriegelungselement unterstützen und entlasten und so sowohl die Montage erleichtern als auch das Airbagmodul in seiner Endposition zusätzlich sichern.

Bevorzugt ist das Verriegelungselement gegen eine Rückstellkraft aus der Verriegelungsstellung bewegbar. Vorteilhafterweise kann dabei die erste bzw. zweite Steckverbindung beim Einführen in der ersten bzw. zweiten Einschubrichtung das Verriegelungselement selbsttätig gegen die Rückstellkraft aus der Verriegelungsstellung bewegen, so dass es beim anschließenden Verschieben in der zweiten Einschubrichtung selbsttätig in die Verriegelungsstellung zurückkehrt und das Airbagmodul auch in der zweiten Einschubrichtung formschlüssig festlegt.

Gleichermaßen kann das Verriegelungselement auch manuell in die Verriegelungsstellung gebracht und dort festgelegt werden. Hierzu kann beispielsweise ein Stift senkrecht zur zweiten Einschubrichtung eingeführt werden.

Sowohl ein manuell als auch ein durch eine elastische Rückstellkraft selbsttätig in die Verriegelungsstellung gebrachtes Verriegelungselement kann vorteilhafterweise wieder aus der Verriegelungsstellung entfernt werden, was ein Demontieren des Airbagmoduls in umgekehrter Reihenfolge gestattet, beginnend mit einer Verschiebung entgegen der zweiten Einschubrichtung, bis die zweite Steckverbindung außer Eingriff kommt. Dies ermöglicht vorteilhafterweise ein einfaches Lösen des Airbagmoduls von dem Fahrzeuginnenverkleidungsteil, beispielsweise zu Wartungszwecken, ohne weiteres Werkzeug.

In einer bevorzugten Ausführung wird die erste und/oder zweite Steckverbindung durch einen oder mehrere Zapfen gebildet, die in entsprechende Aufnahmen formschlüssig eingreifen. Dabei können die Zapfen gleichermaßen an dem Airbagmodul oder dem Fahrzeuginnenverkleidungsteil angeordnet sein. Es können also beispielsweise die Zapfen der ersten und zweiten Steckverbindung am Airbagmodul oder an dem Fahrzeuginnenverkleidungsteil angeordnet sein. Gleichermaßen können die Zapfen der ersten und die Aufnahmen der zweiten Steckverbindung am Airbagmodul oder an dem Fahrzeuginnenverkleidungsteil angeordnet sein.

Die Zapfen können dabei beliebige Formen aufweisen, die sich insbesondere aus den Festigkeitsanforderungen und der gewünschten Montagekinematik ergeben können. So können runde Zapfen durch Drehung um ihre Längsachse Fertigungstoleranzen zum Teil ausgleichen und das Einführen und die Justage erleichtern. Zapfen mit unsymmetrischen, insbesondere eckigen Querschnitten können die Einschubbewegung zusätzlich führen. Lange Zapfen ermöglichen eine besonders gute Führung in Einschubrichtung, während kurze Zapfen insbesondere ein Schwenken um eine zu ihrer Längsachse im Wesentlichen rechtwinkelige Drehachse erleichtern. Dicke Zapfen können große Kräfte aufnehmen, während dünne Zapfen entsprechend elastisch sein und so das Einführen erleichtern können. Bei einer Mehrzahl von Zapfen verteilen sich die aufzunehmenden Kräfte vorteilhaft, so dass die einzelnen Zapfen weniger beansprucht werden und kleiner dimensioniert werden können. Umgekehrt erleichtert eine geringe Zapfenanzahl, insbesondere eine Zapfenanordnung mit nur einem Zapfen, das Einführen in die entsprechende Aufnahme. Je weniger Zapfen vorgesehen sind, umso weniger Positionstoleranzen zueinander und zu den Aufnahmen müssen eingehalten werden.

Um Geräusche zu verhindern oder zu dämpfen, die insbesondere bei spielbehafteten Verbindungen auftreten, kann zwischen wenigstens einem Zapfen einer Zapfenanordnung einer Verbindung und der Aufnahme für diesen Zapfen ein elastisches Element, insbesondere ein Elastomer angeordnet sein. Dieses elastische Element kann insbesondere, wie vorstehend beschrieben, auch das Airbagmodul in die zweite Einschubrichtung vorspannen und so einem Lösen der Befestigung entgegenwirken.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Airbagmodulanordnung nach einer ersten Ausführung der vorliegenden Erfindung in einem seitlichen Schnitt; und
- Fig. 2A bis Fig. 2C: eine Airbagmodulanordnung nach einer zweiten Ausführung der vorliegenden Erfindung in einer der Fig. 1 entsprechenden Darstellung.

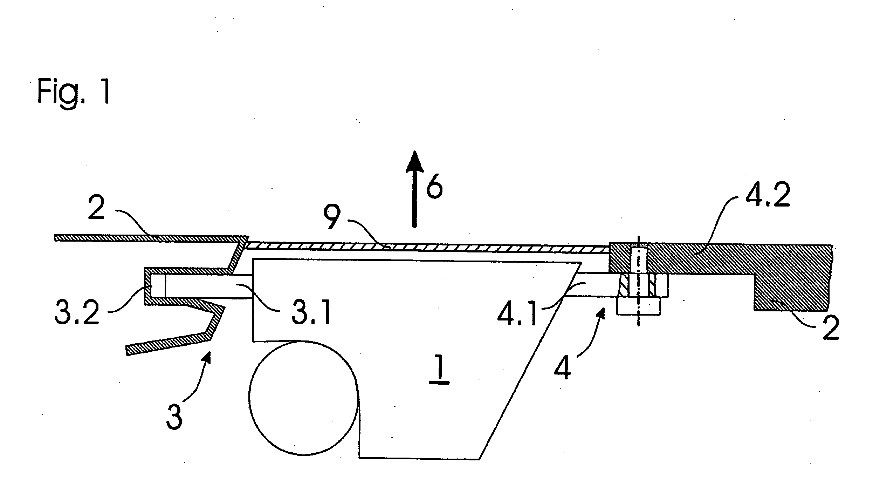

Fig. 1 zeigt eine Airbagmodulanordnung nach einer ersten Ausführung der vorliegenden Erfindung mit einem Airbagmodul 1, das an einer Armaturentafel 2 befestigt und durch eine Airbagabdeckung 9 gegen einen Fahrgastinnenraum abgedeckt ist. Beim Öffnen des Airbags (nicht dargestellt) durchbricht dieser die Airbagabdeckung 9 und entfaltet sich in Schussrichtung 6.

Das Airbagmodul 1 weist an seiner einen Längs - oder Querseite ein erstes Verbindungselement in Form eines ersten Zapfens 3.1 auf, der in eine entsprechende erste Aufnahme 3.2 eingesteckt ist. Diese ist in der Armaturentafel 2 ausgebildet und bildet mit dem ersten Zapfen 3.1 eine erste Steckverbindung 3, die das Airbagmodul 1 in der Schussrichtung 6 und einer hierzu senkrechten Richtung (normal zur Zeichenebene der Fig. 1) formschlüssig festlegt.

An seiner zweiten Längs - oder Querseite weist das Airbagmodul 1 ein drittes Verbindungselement in Form eines Flansches 4.1 auf. Dieser ist durch eine Schraube mit einem vierten Verbindungselement in Form eines Flansches 4.2 verbunden, der an der Armaturentafel 2 ausgebildet ist. Die Flansche 4.1 und 4.2 bilden zusammen eine zweite Schraubverbindung 4, die das Airbagmodul zusammen mit der ersten Steckverbindung 3 zuverlässig an der Armaturentafel 2 festlegt.

Die Montage des Airbagmoduls 1 ist sehr einfach: zunächst wird der erste Zapfen 3.1 in die erste Aufnahme 3.2 eingeführt und anschließend das Airbagmodul solange verschoben, bis eine Durchgangsbohrung im Flansch 4.1 des Airbagmoduls und eine Sackbohrung im Flansch 4.2 der Armaturentafel miteinander fluchten. Anschließend werden diese miteinander verschraubt.

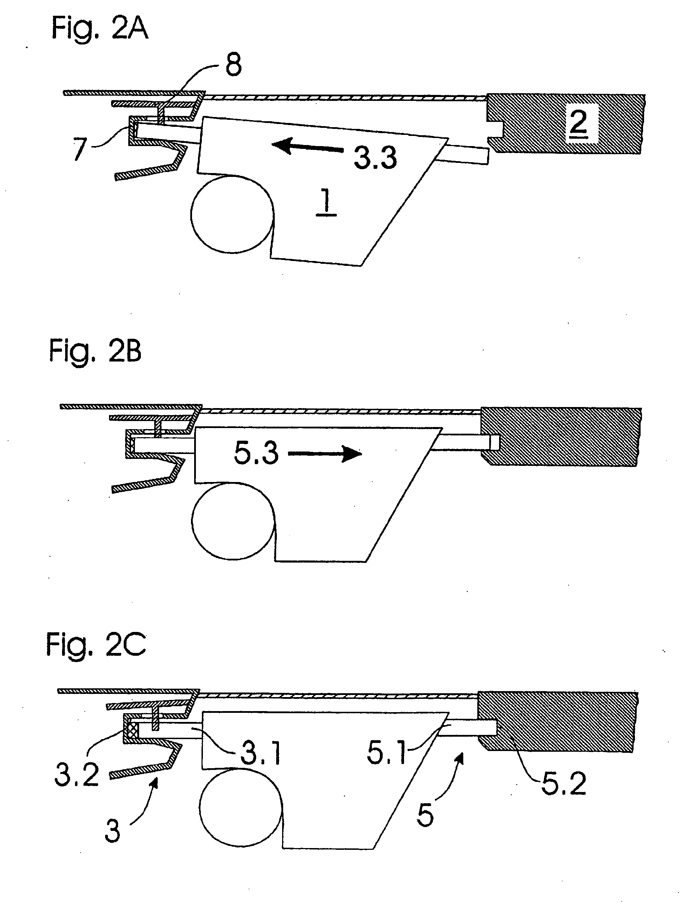

Fig. 2A - 2C zeigen eine Airbagmodulanordnung nach einer zweiten Ausführung der vorliegenden Erfindung. Mit der ersten Ausführung übereinstimmende Elemente sind mit gleichen Bezugszeichen bezeichnet, so dass nachfolgend nur auf die Unterschiede zur ersten Ausführung eingegangen wird.

Fig. 2C zeigt die Endposition des Airbagmoduls 1, während die Fig. 2A, 2B Zwischenschritte bei dessen Montage darstellen.

Zunächst wird ein erster Zapfen 3.1 des Airbagmoduls 1 (s. Fig. 2C) in eine erste Aufnahme 3.2 in der Armaturentafel 2 in eine erste Einschubrichtung 3.3 eingeführt (Fig. 2A). Dabei wird ein elastisches Element in Form eines Elastomers 7 in der ersten Einschubrichtung komprimiert. Zugleich wird ein Verriegelungselement 8 durch den ersten Zapfen 3. 1 aus der ersten Aufnahme 3.2 gedrückt und hierbei elastisch deformiert.

Anschließend wird das Airbagmodul um eine zur ersten Einschubrichtung 3.3 senkrechten Drehachse (senkrecht zur Zeichenebene der Fig. 2A - 2C) gekippt, bis ein zweiter Zapfen 5.1 (s. Fig. 2C), der an der zweiten Längsseite des Airbagmoduls ausgebildet ist, mit einer zweiten Aufnahme 5.2 fluchtet, die in der Armaturentafel 2 ausgebildet ist.

Hierzu weist die erste Steckverbindung 3, die von dem ersten Zapfen 3.1 und der ersten Aufnahme 3.2 gebildet wird, ein leichtes Spiel auf, welches das Kippen des Airbagmoduls 1 gestattet.

In einer nicht dargestellten weiteren Ausführung ist die erste Steckverbindung im Wesentlichen spielfrei. Das Einführen in der ersten Einschubrichtung 3.3 und das anschließende Kippen des Airbagmoduls 1 erfolgt hier unter elastischer Deformation des ersten Zapfens 3.1 und der ersten Aufnahme 3.2.

Nach dem Ausrichten des zweiten Zapfens 5.1 zur zweiten Aufnahme 5.2 wird das Airbagmodul in einer zweiten Einschubrichtung 5.3 verschoben, die im Wesentlichen parallel zur ersten Einschubrichtung 3 .3 ist (Fig. 2B) . Hierbei greift der zweite Zapfen 5.1 formschlüssig in die zweite Aufnahme 5.2 ein und bildet eine zweite Steckverbindung 5. Ein Anschlag begrenzt die Bewegung in der zweiten Einschubrichtung 5.3 und legt das Airbagmodul in seiner Endposition (Fig. 2C) fest.

Während der Verschiebung in die zweite Einschubrichtung 5.3 (Fig. 2B) entspannt sich das elastische Element 7 und unterstützt so die Montagebewegung. Es ist so dimensioniert, dass es auch in der Endposition (Fig. 2C) noch etwas deformiert ist und die erste und zweite Steckverbindung 3, 5 elastisch in der zweiten Einschubrichtung 5.3 vorspannt. Hierdurch ist das Airbagmodul 1 in dieser Richtung kraftschlüssig festgelegt, wobei vorteilhaft Vibrationen des Airbagmoduls 1 gegenüber der Armaturentafel 2 gedämpft und so unerwünschte Geräusche reduziert werden.

Sobald das Airbagmodul 1 in seine Endposition (Fig. 2C) gelangt, kehrt das Verriegelungselement 8 aufgrund der durch seine elastische Deformation induzierten Rückstellkraft in seine Verrieglungsstellung zurück, greift formschlüssig in eine entsprechende Aufnahme (nicht dargestellt) im ersten Zapfen 3.1 der ersten Steckverbindung 3 ein und verhindert so eine Bewegung des Airbagmoduls 1 entgegen der zweiten Einschubrichtung 5.3, die zu einem Lösen der Verbindungen 3, 5 führen könnte.

Um das Airbagmodul 1 zu Wartungszwecken von der Armaturentafel 2 lösen zu können, kann das Verriegelungselement 8 jedoch manuell durch Druck auf einen hervorragenden Schenkel aus seiner Verriegelungsstellung bewegt werden, was ein Verschieben des Airbagmoduls 1 entgegen der zweiten Einschubrichtung 5.3 und damit eine Demontage in umgekehrter Reihenfolge zu der oben beschriebenen Montage ermöglicht.

In den Ausführungsbeispielen umfasst eine erste bzw. zweite Zapfenanordnung jeweils nur einen ersten bzw. zweiten Zapfen 3.1 bzw. 5.1, der jeweils an einer Längs - oder Querseite des Airbagmoduls 1 angeformt ist. In nicht dargestellten Modifikationen können die erste und/oder zweite Zapfenanordnung auch mehrere erste bzw. zweite Zapfen umfassen, die in entsprechende erste bzw. zweite Aufnahmen eingreifen. Gleichermaßen kann die erste und/oder zweite Zapfenanordnung auch an der Armaturentafeln 2 ausgebildet sein, wobei dann das Airbagmodul 1 mit der entsprechenden ersten bzw. zweiten Aufnahme ausgebildet ist. Die erste und/oder zweite Verbindung 3, 4 bzw. 5 kann auch an einer Querseite des Airbagmoduls 1 angeordnet sein.

### Bezugszeichenliste

| | |
|---|---|
| 1 | Airbagmodul |
| 2 | Armaturentafel |
| 3 | Erste Steckverbindung |
| 3.1 | Erster Zapfen |
| 3.2 | Erste Aufnahme |
| 4 | Zweite Schraubverbindung |
| 4.1, 4.2 | Flansche |
| 5 | Zweite Steckverbindung |
| 5.1 | Zweiter Zapfen |
| 5.2 | Zweite Aufnahme |
| 6 | Schussrichtung |
| 7 | Elastisches Element |
| 8 | Verriegelungselement |
| 9 | Airbagabdeckung |

## Patentansprüche

1. Airbagmodulanordnung für ein Kraftfahrzeug, mit einem Airbagmodul (1) und einem Fahrzeuginnenverkleidungsteil, insbesondere einer Armaturentafel (2), wobei das Airbagmodul ein erstes Verbindungselement (3.1) einer ersten Steckverbindung (3) und ein drittes Verbindungselement (4.1; 5.1) einer zweiten Verbindung (4; 5) aufweist, und wobei das Fahrzeuginnenverkleidungsteil ein zweites Verbindungselement (3.2), das zusammen mit dem ersten Verbindungselement (3.1) des Airbagmoduls die erste Steckverbindung (3) bildet, und ein viertes Verbindungselement (4.2; 5.2) aufweist, das zusammen mit dem dritten Verbindungselement (4.1; 5.1) des Airbagmoduls die zweite Verbindung (4; 5) bildet, **dadurch gekennzeichnet, dass** zwischen wenigstens einem Zapfen einer Zapfenanordnung einer Verbindung und der Aufnahme für diesen Zapfen ein elastisches Element, insbesondere ein Elastomer (7) angeordnet ist; und/oder
dass die zweite Verbindung als Schraubverbindung (4) ausgebildet ist, wobei eine Bohrung in dem dritten und/oder vierten Verbindungselement als Langloch in einer zu einer Einschubrichtung im Wesentlichen senkrechten Richtung ausgebildet ist.

2. Airbagmodulanordnung nach Anspruch 1, **dadurch gekennzeichnet, dass** die Schraubverbindung (4) im Wesentlichen senkrecht zu der Einschubrichtung (3.3) der ersten Steckverbindung (3) ausgerichtet ist.

3. Airbagmodulanordnung nach Anspruch 2, **dadurch gekennzeichnet, dass** die Schraubverbindung (4) im Wesentlichen parallel zu einer Schussrichtung (6) des Airbagmoduls (1) ausgerichtet ist.

4. Airbagmodulanordnung für ein Kraftfahrzeug, mit einem Airbagmodul (1) und einem Fahrzeuginnenverkleidungsteil, insbesondere einer Armaturentafel (2), wobei das Airbagmodul ein erstes Verbindungselement (3.1) einer ersten Steckverbindung (3) und ein drittes Verbindungselement (4.1; 5.1) einer zweiten Verbindung (4; 5) aufweist, und wobei das Fahrzeuginnenverkleidungsteil ein zweites Verbindungselement (3.2), das zusammen mit dem ersten Verbindungselement (3.1) des Airbagmoduls die erste Steckverbindung (3) bildet, und ein viertes Verbindungselement (4.2; 5.2) aufweist, das zusammen mit dem dritten Verbindungselement (4.1; 5.1) des Airbagmoduls die zweite Verbindung (4; 5) bildet, und wobei die zweite Verbindung als Steckverbindung (5) ausgebildet ist, **dadurch gekennzeichnet,**
**dass** zwischen wenigstens einem Zapfen einer Zapfenanordnung einer Verbindung und der Aufnahme für diesen Zapfen ein elastisches Element, insbesondere ein Elastomer (7) angeordnet ist; und/oder
**dass** die erste und/oder zweite Steckverbindung (3, 5) ein Verriegelungselement (8) umfasst, welches in einer Verriegelungsstellung das Airbagmodul in einer gegenüber einer maximalen Einschubposition versetzten Endposition gegen eine Bewegung hin zu der maximalen Einschubposition festlegt.

5. Airbagmodulanordnung nach Anspruch 4, **dadurch gekennzeichnet, dass** eine zweite Einschubrichtung (5.3) der zweiten Steckverbindung im Wesentlichen parallel zu einer ersten Einschubrichtung (3.3) der ersten Steckverbindung (3) ausgerichtet ist.

6. Airbagmodulanordnung nach Anspruch 5, **dadurch gekennzeichnet, dass** das elastische Element (7) das Airbagmodul in der Einschubrichtung (3.3, 5.3) der ersten und/oder zweiten Steckverbindung (3, 5) vorspannt.

7. Airbagmodulanordnung nach Anspruch 4, **dadurch gekennzeichnet, dass** das Verriegelungselement (8) gegen eine Rückstellkraft aus der Verriegelungsstellung bewegbar ist.

8. Airbagmodulanordnung nach einem der Ansprüche 4 bis 7, **dadurch gekennzeichnet, dass** das dritte Verbindungselement eine zweite Zapfenanordnung mit wenigstens einem zweiten Zapfen (5.1) und das vierte Verbindungselement eine zweite Aufnahme (5.2) für die zweiten Zapfen (5.1) der zweiten Zapfenanordnung umfasst.

9. Airbagmodulanordnung nach einem der Ansprüche 4 bis 7, **dadurch gekennzeichnet, dass** das vierte Verbindungselement eine zweite Zapfenanordnung mit wenigstens einem zweiten Zapfen und das dritte Verbindungselement eine zweite Aufnahme für die zweiten Zapfen der zweiten Zapfenanordnung umfasst.

10. Airbagmodulanordnung nach einem der vorhergehenden Ansprüche, **dadurch gekennzeichnet, dass** das erste Verbindungselement eine erste Zapfenanordnung mit wenigstens einem ersten Zapfen (3.1) und das zweite Verbindungselement eine erste Aufnahme (3.2) für die ersten Zapfen (3.1) der ersten Zapfenanordnung umfasst.

11. Airbagmodulanordnung nach einem der vorhergehenden Ansprüche 1 bis 9, **dadurch gekennzeichnet, dass** das zweite Verbindungselement eine erste Zapfenanordnung mit wenigstens einem ersten Zapfen und das erste Verbindungselement eine erste Aufnahme für die ersten Zapfen der ersten Zapfenanordnung umfasst.

## Claims

1. An airbag module assembly for a motor vehicle, comprising an airbag module (1) and a vehicle interior panel part, especially an instrument panel (2), with the airbag module comprising a first connection element (3.1) of a first plug-in connection (3) and a third connection element (4.1; 5.1) of a second connection (4; 5), and with the vehicle interior panel part comprising a second connection element (3.2) which forms the first plug-in connection (3) together with the first connection element (3.1) of the airbag module, and a fourth connection element (4.2; 5.2) which forms the second connection (4; 5) together with the third connection element (4.1; 5.1) of the airbag module, **characterized in that** an elastic element, especially an elastomer (7), is arranged between at least one pin of a pin arrangement of a connection and the receptacle for said pin, and/or that the second connection is arranged as a screwed joint (4), with one bore hole in the third and/or fourth connection element being arranged as an oblong hole in a direction which is substantially perpendicular to the direction of insertion.

2. An airbag module assembly according to claim 1, **characterized in that** the screwed joint (4) is aligned in a substantially perpendicular way in relation to the direction of insertion (3.3) of the first plug-in connection (3).

3. An airbag module assembly according to claim 2, **characterized in that** the screwed joint (4) is aligned substantially parallel to a firing direction (6) of the airbag module (1).

4. An airbag module assembly for a motor vehicle, comprising an airbag module (1) and a vehicle interior panel part, especially an instrument panel (2), with the airbag module comprising a first connection element (3.1) of a first plug-in connection (3) and a third connection element (4.1; 5.1) of a second connection (4; 5), and with the vehicle interior panel part comprising a second connection element (3.2) which forms the first plug-in connection (3) together with the first connection element (3.1) of the airbag module, and a fourth connection element (4.2; 5.2) which forms the second connection (4; 5) together with the third connection element (4.1; 5.1) of the airbag module, and with the second connection being arranged as a plug-in connection (5), **characterized in that** an elastic element, especially an elastomer (7), is arranged between at least one pin of a pin arrangement of a connection and the receptacle for said pin, and/or that the first and/or second plug-in connection (3, 5) comprises a locking element (8) which in a locking position fixes the airbag module in an end position offset in relation to a maximum insertion position against a movement towards the maximum insertion position.

5. An airbag module assembly according to claim 4, **characterized in that** a second insertion direction (5.3) of the second plug-in connection is aligned substantially parallel to a first insertion direction (3.3) of the first plug-in connection (3).

6. An airbag module assembly according to claim 5, **characterized in that** the elastic element (7) pretensions the airbag module in the direction of insertion (3.3, 5.3) of the first and/or second plug-in connection (3, 5).

7. An airbag module assembly according to claim 4, **characterized in that** the locking element (8) can be moved from the locked position against a restoring force.

8. An airbag module assembly according to one of the claims 4 to 7, **characterized in that** the third connection element comprises a second pin arrangement with at least one second pin (5.1) and the fourth connection element comprises a second receptacle (5.2) for the second pin (5.1) of the second pin arrangement.

9. An airbag module assembly according to one of the claims 4 to 7, **characterized in that** the fourth connection element comprises a second pin arrangement with at least one second pin and the third connection element comprises a second receptacle for the second pin of the second pin arrangement.

10. An airbag module assembly according to one of the preceding claims, **characterized in that** the first connection element comprises a first pin arrangement with at least one first pin (3.1) and the second connection element comprises a first receptacle (3.2) for the first pin (3.1) of the first pin arrangement.

11. An airbag module assembly according to one of the claims 1 to 9, **characterized in that** the second connection element comprises a first pin arrangement with at least one first pin and the first connection element comprises a first receptacle for the first pins of the first pin arrangement.

## Revendications

1. Dispositif de module de coussin gonflable de sécurité pour un véhicule à moteur, avec un module de coussin gonflable de sécurité (1) et une partie d'habillage intérieur de véhicule, en particulier un tableau de bord (2), dans lequel le module de coussin gonflable de sécurité présente un premier élément d'assemblage (3.1) d'un premier assemblage emboîté (3) et un troisième élément d'assemblage (4.1 ; 5.1) d'un deuxième assemblage (4 ; 5) et dans lequel la partie d'habillage intérieur de véhicule présente un deuxième élément d'assemblage (3.2), qui forme avec le premier élément d'assemblage (3.1) du module de coussin gonflable de sécurité le premier assemblage emboîté (3), et un quatrième élément d'assemblage (4.2 ; 5.2) qui forme avec le troisième élément d'assemblage (4.1 ; 5.1) du module de coussin gonflable de sécurité le deuxième (4 ; 5), **caractérisé en ce qu'**il est prévu entre au moins un goujon d'un dispositif de goujons d'un assemblage et le logement pour ce goujon un élément élastique, en particulier un élastomère (7), et/ou
**en ce que** le deuxième assemblage est conformé comme un assemblage vissé (4), auquel cas un trou est percé dans le troisième élément de liaison et/ou le quatrième sous la forme d'un trou oblong dans une direction sensiblement perpendiculaire à la direction d'insertion.

2. Dispositif de module de coussin gonflable de sécurité selon la revendication 1, **caractérisé en ce que** l'assemblage vissé (4) est orienté de façon sensiblement perpendiculaire au sens d'insertion (3.3) du premier assemblage emboîté (3).

3. Dispositif de module de coussin gonflable de sécurité selon la revendication 2, **caractérisé en ce que** l'assemblage vissé (4) est orienté de façon sensiblement parallèle à la direction de déclenchement (6) du module de coussin gonflable de sécurité (1).

4. Dispositif de module de coussin gonflable de sécurité pour un véhicule à moteur, avec un module de coussin gonflable de sécurité (1) et une partie d'habillage intérieur de véhicule, en particulier un tableau de bord (2), dans lequel le module de coussin gonflable de sécurité présente un premier élément d'assemblage (3.1) d'un premier assemblage emboîté (3) et un troisième élément d'assemblage (4.1 ; 5.1) d'un deuxième assemblage (4 ; 5) et dans lequel la partie d'habillage intérieur de véhicule présente un deuxième élément d'assemblage (3.2), qui forme avec le premier élément d'assemblage (3.1) du module de coussin gonflable de sécurité le premier assemblage emboîté (3), et un quatrième élément d'assemblage (4.2 ; 5.2) qui forme avec le troisième élément d'assemblage (4.1 ; 5.1) du module de coussin gonflable de sécurité le deuxième assemblage (4 ; 5), et dans lequel le deuxième assemblage est conformé comme un assemblage emboîté (5), **caractérisé en ce qu'**il est prévu entre au moins un goujon d'un dispositif de goujon d'un assemblage et le logement de ce goujon un élément élastique, en particulier un élastomère (7) ; et/ou
**en ce que** le premier assemblage emboîté et/ou le deuxième (3, 5) comprennent un élément de verrouillage (8) qui fixe, dans une position de verrouillage, le module de coussin gonflable de sécurité dans une position finale décalée par rapport à une position d'insertion maximale afin d'empêcher un déplacement vers la position d'insertion maximale.

5. Dispositif de module de coussin gonflable de sécurité selon la revendication 4, **caractérisé en ce qu'**une deuxième direction d'insertion (5.3) du deuxième assemblage emboîté est orientée de façon sensiblement parallèle à une première direction d'insertion (3.3) du premier assemblage emboîté (3).

6. Dispositif de module de coussin gonflable de sécurité selon la revendication 5, **caractérisé en ce que** l'élément élastique (7) précontraint le module de coussin gonflable de sécurité dans la direction d'insertion (3.3, 5.3) du premier assemblage emboîté et/ou du deuxième (3, 5).

7. Dispositif de module de coussin gonflable de sécurité selon la revendication 4, **caractérisé en ce que** l'élément de verrouillage (8) peut être déplacé à partir de la position de verrouillage contre une force de rappel.

8. Dispositif de module de coussin gonflable de sécurité selon l'une des revendications 4 à 7, **caractérisé en ce que** le troisième élément d'assemblage comprend un deuxième dispositif de goujons avec au moins un deuxième goujon (5.1) et le quatrième élément d'assemblage comprend un deuxième logement (5.2) pour le deuxième goujon (5.1) du deuxième dispositif de goujons.

9. Dispositif de module de coussin gonflable de sécurité selon l'une des revendications 4 à 7, **caractérisé en ce que** le quatrième élément d'assemblage comprend un deuxième dispositif de goujons avec au moins un deuxième goujon et le troisième élément d'assemblage comprend un deuxième logement pour les deuxièmes goujons du deuxième dispositif de goujons.

10. Dispositif de module de coussin gonflable de sécurité selon l'une des revendications précédentes, **caractérisé en ce que** le premier élément d'assemblage comprend un premier dispositif de goujons avec au moins un premier goujon (3.1) et le deuxième élément d'assemblage comprend un premier logement (3.2) pour le premier goujon (3.1) du premier dispositif de goujons.

11. Dispositif de module de coussin gonflable de sécurité selon l'une des revendications 1 à 9, **caractérisé en ce que** le deuxième élément d'assemblage comprend un premier dispositif de goujons avec au moins un premier goujon et le premier élément d'assemblage comprend un premier logement pour les premiers goujons du premier dispositif de goujons.
